# EUROPEAN PATENT APPLICATION

(11) **EP 4 534 947 A1**
(43) Date of publication of application: **09.04.2025**
(21) Application number: 23201938.0
(22) Date of filing: 05.10.2023
(51) Int. Cl.: G01B 5/008, G01B 21/04, B25J 13/02, G05B 19/4061, G05B 19/423, G01L 5/167, G01L 5/22

(54) **HUMAN INTERACTION ELEMENT WITH MEASUREMENT FUNCTION FOR COORDINATE MEASURING MACHINE**

(71) Applicant: Hexagon Technology Center GmbH, 9435 Heerbrugg (CH)
(72) Inventor: SUN, Rainer, AT-6923 Lauterach (AT); SCHEJA, Jochen, A-6845 Hohenems (AT)
(74) Representative: Kaminski Harmann

(57) **Abstract**

The invention relates to an articulated coordinate measuring machine (1) comprising, a base, a set of articulated elements, a probe and an operator action sensor (403) mounted on a hand-controlled member (141). The operator action sensor is configured to derive operator action data, regarding a force or a torque exerted or a displacement caused by an operator action on a hand-controlled member of the articulated arm coordinate measuring machine.

## Description

### FIELD OF THE INVENTION

The invention relates to an operator action sensor for a substantially manually driven articulated arm coordinate measuring machine (AA-CMM), the CMM with the operator action sensor and the operation of said CMM. The CMM comprises a probe for approaching an object point, and a set of members connecting the probe to a base. The probe is moved at least partially manually by an operator exerting a force or torque on a hand-controlled member of the set of members.

### BACKGROUND OF THE INVENTION

A CMM is a machine configured to measure 3D coordinates of certain points, in particular the whole surface topography, of a workpiece. CMMs are important in various industries, e.g. production measurement, quality control, or reverse engineering. They are utilized, e.g., to determine deviations of the geometry of manufactured products from design models, in particular to determine whether the deviations are within the manufacturing tolerance. Another application of a CMM gaining more prominence is the reverse engineering of an object, where no design model exists, but an operator provides a guidance of the probe.

Portable measurement arms offer a flexible, time and cost-efficient solution for such measurement tasks. Portable measurement arms comprise a base connecting the machine to a typically inert support structure, a set of articulated elements, a set of internal sensors providing data regarding the state of said elements, a probe interface a configured to accommodate a probe, typically in an exchangeable manner, and one or more probe. The probe is configured to interact with the workpiece in tactile and/or in non-contact manner and (relative) coordinate data regarding an object point on the workpiece is derived based on the state of the articulated elements and a data provided by a probe.

Many designs are at least theoretically feasible for the types and arrangement of the articulated elements of portable measurement arms. However, practical considerations, e.g., the need for ultra-high accuracy, low weight, large accessible volume, lead to a preferred embodiment, in which the arm comprises a series of hinges and elongated cylinders comprising parts allowing rotation about their axes. Most of the above-mentioned elements are non-motorized, i.e., the probe head is manually guided and a decisive part of the driving force for the movement of the articulated elements is provided by the muscle power of the operator.

To achieve high mobility and good accessibility of the workpieces such CMM-s are under-defined systems, i.e., the same pose of the probe can be realized by different relative poses of the element. Such CMMs are typically operated by a "two-handed grip", wherein the operator fixes the pose of the probe with one hand, and holds one of the intermediate members to provide a suitable pose of said member, e.g., the second cylinder or the second hinge. Said intermediate member will be referred to in the following as the "hand-controlled member". Alternatively, the operator might guide the probe without directly providing the pose for any intermediate members, this guidance will be referred to as "one-handed grip". In the latter case the probe interface or a suitable alternative component plays the role of the "hand-controlled member".

Since the torque or force caused by the operator grip on the hand-controlled member is a mandatory feature of operating such instruments, it is desirable to determine the magnitude and impact of the direct operator action on the AACMM.

Furthermore, some contemporary embodiments of the portable measurement arms comprise servo units to aid the operator in guiding the probe head or the portable measurement arm is realized as fully motorized arm. Due to the design of the articulated elements, providing commands for the servo units or motors is however non-intuitive and does not correspond to the typical workflow.

### OBJECT OF THE INVENTION

In view of the above circumstances, one object of the present invention is to improve the handling of manually guided AACMMs, in particular to provide an easy-to-handle command element for the AACMM.

A second objective of the present invention is to improve the measurement accuracy of AACMMs.

These objectives are at least partly achieved by realizing the characterizing features of the independent claims. Features, which further develop the invention in an alternative or advantageous manner are described in the dependent claims.

### SUMMARY OF THE INVENTION

The invention relates to an operator action sensor for an AACMM. The operator action sensor is configured to be mounted on a hand-controlled member of an AACMM. The hand-controlled member is configured to be held by an operator of the AACMM. The operator action sensor is configured to detect an operator action, comprising exertion of a force and/or a torque by the operator to the operator action sensor for providing a desired pose of the hand-controlled member. The operator action sensor is configured to transfer a force and/or torque at least partly to the hand-controlled member. The operator action sensor is configured to generate operator action sensor data and provide it to the AACMM. The operator action sensor data comprises at least two-degree-of-freedom data regarding (a) the force and/or the torque exerted by the operator, and/or (b) a displacement caused by the operator action. Displacement in the sense of the invention comprises rigid body translation, rotation, straining and shearing.

The operator action sensor data, in the sense of the invention, represent an effect of direct mechanical contact between the AACMM and the operator. Direct mechanical contact might be a support/hold of the machine, but can equally represent the guidance of the probe, i.e., dynamic action. The inventive sensor or system at least derive data regarding the effect, i.e., bending, shearing, straining, on the components of AACMM. Said operator action sensor data might also be used for providing commands for the AACMM. E.g., the AACMM might provide an assessment regarding a planned operator action and provide the commands to improve the accuracy, reach etc. of the AACMM for a subsequent measurement.

In some embodiments, the operator action sensor comprises a first and a second sensor element. The first and second sensor elements are configured to be mounted to the hand-controlled member with a defined geometric spacing and held independently by the operator. In other words, the operator action sensor might support holding the hand-controlled member at different positions or orientations. This feature is especially useful, when the operator prefers to perform a measurement sequence with a grip change, e.g., directly controlling the pose of the hand-controlled member during a coarse repositioning and performing the actual measurement by grabbing the probe. In some specific embodiments, the operator action sensor data comprises data regarding a bending of the hand-controlled member. Alternatively or additionally, the operator action sensor might comprise a third sensor element mounted to a further member and/or to the probe.

In some embodiments, the operator action sensor comprises a feedback element, in particular a feedback element with light emitting diodes (LED), configured to provide feedback regarding an operational status of the operator action sensor and/or the CMM. Feedback in the sense of the invention might represent simple data, e.g., an error state detected, standby or sensor/servo active. Such simple feedback might be realized by LED lights, or a light band configured to provide three different colors. Feedback might also represent more complex data and the operator action sensor might comprise a display unit to display the data. The operator action sensor might be configured to provide haptic or acoustic feedback.

In some embodiments, the operator action sensor comprises a command input element configured to receive operator command input data and to provide it to the CMM. The operator command input data might cause the activation or deactivation of functionalities or modes, e.g., a precision or repositioning mode, or an assistance or safety functionality. In some specific embodiments, at least one command input element is a hardware button or switch and the operator command input data correspond to an interaction or a state of the button or switch. Alternatively or additionally, at least one command input element might be a touch sensitive surface and the operator command input data correspond to a touch gesture, in particular a multi-touch gesture. The CMM might be configured to interpret the operator command input data based on a context sensitive menu.

In some embodiments, the operator action sensor comprises (a) an outer surface configured to be held by the operator, (b) an inner surface configured to interact with the hand-controlled member, in particular to transfer a part of the force or torque exerted by the operator, (c) an internal volume comprising a sensing element configured to provide the operator action sensor data, and (d) a thermal isolation region configured to provide a thermal isolation between the inner and the outer surfaces. In some specific embodiments, the operator action sensor comprises a bearing configured to provide a rotatability of the outer surface with respect to the internal volume such that the operator action sensor data is provided independently of the rotation state of the outer surface.

The present invention also relates to an AACMM. The AACMM comprises a probe for approaching an object point, a set of members connecting the probe to a base, and a set of internal sensors. The members comprise links and joints.

The probe is moved at least partially manually by an operator exerting a force or torque on a hand-controlled member of the set of members. Moving at least partially manually in the sense of the invention comprises full manual control, with substantially all the driving force being provided by the muscle power of the operator. Motorized or predominantly servo-assisted operation, in which the operator gives guidance commands by gesture means and by touching the hand-controlled member, also constitutes a case of moving the probe interface at least partly manually. In other words, the operator guides the probe not in a remote controlled fashion, e.g. by a joystick or buttons arranged on a control element physically distinct from the articulated members of the AACMM. The probe is configured to measure probing data corresponding to an interaction between the probe and the object point.

Each sensor of the set of internal sensors is (i) associated with at least one of the members or the base, and (ii) configured to provide actual link data regarding a measured length and/or bending of the respective link, and/or actual joint data regarding a measured pose change provided by the respective joint or the base. The CMM is configured (a) to provide a pose of the probe based on the actual link and actual joint data, and (b) to provide coordinate data of the object point based on the probing data and the pose of the probe.

The CMM further comprises an inventive operator action sensor mounted at a hand-controlled member. The operator action sensor is configured to generate operator action sensor data and provide it to the CMM. The hand-controlled member can be any one articulated members. Moreover, the invention is in no way limited to the application of a single sensor element and a single hand-controlled member. A plurality of sensor elements might be utilized sequentially or in a parallel manner. From here on, unless otherwise provided, only embodiments with a single sensor element are discussed in detail. The specific features of AACMMs having a plurality of sensor elements shall be applied accordingly.

In some embodiments, the CMM comprises a pose determination functionality for determining the pose of the probe. The pose determination functionality comprises (i) accessing arrangement data comprising data regarding an arrangement of the members and kinematic constraints between the members, (ii) providing component geometry data for each of the links comprising (a) the actual link data, or (b) link model data regarding a calculated length and/or bending of the respective link based on the arrangement data, the actual link data, the actual joint data and the operator action sensor data, (iii) providing component geometry data for each of the joints comprising (a) the actual joint data, and/or (b) joint model data regarding a calculated pose change provided by the respective joint based on the arrangement data, the actual link data, the actual joint data, and the operator action sensor data; and (iv) providing the pose of the probe based on the arrangement data and the component geometry data. It is clear that the utilization of numerals and letters does not represent a sequence of performing the said actions, but rather a listing of actions to be carried out in a sensible order. Variations in realizing the embodiments are within the sense of the invention.

Embodiments in which the component geometry data is derived by modelling the AACMM with respect to the arrangement data are advantageous for high precision measurement. Especially when the modelling is performed based on sensor data and respecting the kinematic and dynamic behavior of the various components.

Nevertheless, one or more components might be represented by nominal geometry data or nominal joint data, in particular wherein said component is idling during the measurement or its contribution to the measurement inaccuracies is negligible as compared to other components.

In some embodiments, the component geometry data comprise model and/or actual data for a plurality of members from the set of members, in particular each member. In some specific embodiments, the actual and/or model data comprises data regarding effects of gravity on the set of members. In some specific embodiments, the model data is derived based on actual data associated for at least one member, in particular for each member. The invention can be beneficially used for modelling the AACMM. I.e., processing the operator action sensor data to derive the effect of operator actions for each of the member allows a more precise modelling of the AACMM. Nevertheless, the invention is also applicable without a modelling of the AACMM.

In some embodiments, the AACMM comprises a counterweight unit associated with a first joint and configured to provide a servo-torque. The AACMM comprises an assistance functionality. The assistance functionality comprises (a) deriving for the first joint a resultant torque resulting from the force or torque exerted by the operator by guiding the hand-controlled member, and (b) providing a servo-torque acting in a direction corresponding to the resultant torque. In some specific embodiments, the CMM regulates the servo-torque such that the force and/or torque exerted by the operator, or the displacement caused by the operator is reduced, in particular approaches zero. In other words, the servo-torque reduces the magnitude of the force/torque the operator needs to exert. Alternatively or additionally, the CMM might derive the resultant torque on the basis of the arrangement data, the actual joint data and the actual link data.

In some specific embodiments, the first joint connects a base to a first link. The counterweight unit comprises (i) a passive component comprising a counterbalance and/or a spring, in particular a coil spring arranged along an axis of the first link, (ii) an active component comprising a motor, and (iii) a mechanism configured to transfer torques provided by the active and passive components to the first joint. The torque provided by the passive component is constant or corresponds to a gravity related torque acting on the first joint. The torque provided by the active component is responsive to the operator action sensor data. Such design enables a better responsiveness by the active component. The torque provided by the passive component is adjustable in some embodiments.

In some specific embodiments, the AACMM comprises a further counterweight unit associated with a second joint connecting the first link to the second link. The further counterweight unit is similar to or a simplified version of the counterweight unit, in particular it might comprise only a non-adjustable passive component. Alternatively or additionally, the base might be motorized and a base servo-torque is provided analogously to the servo-torque.

In some embodiments, the AACMM is configured to provide the servo-torque in dependence of (i) a pose and type of the probe, and/or (ii) a linear and/or angular velocity of the probe, and/or (iii) an orientation of the second link and/or, (iv) a pose of the second joint, and/or (v) a previous operator action, e.g. operator command input data. The servo-torque might be regulated based on a plurality of such parameters. E.g., a distance, which might be considered typical repositioning distance for a tactile sensor can equally be a measurement distance for a non-contact sensor.

In some specific embodiments, the AACMM is configured to operate in a precision mode and in a repositioning mode. The precision mode and the repositioning mode are activated automatically based on the pose or operational status of the probe, automatically based on operator action data, or manually by receiving respective operator command input data. In some specific embodiments, the AACMM is configured to recognize the mounted probe, e.g., whether a tactile or non-contact probe is utilized, and update the activation regime for the precision mode and repositioning mode with respect to the recognized probe.

In the precision mode (i) a velocity of at least one member is limited to a velocity range corresponding to a precision mode, (ii) an orientation of at least one member is limited to an orientation range corresponding to the precision mode, (iii) the responsiveness of the active component to the operator action sensor data is increased to a value corresponding to the precision mode. In particular the precision mode is configured to support a slow, precise positioning of the probe with respect to certain features of the workpiece in the proximity of the workpiece. The probe is guided in precision mode with reduced physical effort, in particular substantially without resistance.

In the repositioning mode (i) velocities above the velocity limit of the precision mode are enabled, and (ii) the responsiveness of the active component to the operator action sensor data is decreased to a value corresponding to the repositioning mode. In particular the repositioning mode is configured to support coarse movement of the AACMM, e.g. bringing the AACMM into a parking position during the exchange of the workpiece.

In some embodiments, the hand-controlled member is the link kinematically nearest to the probe. In some specific embodiments, the operator action sensor is configured to provide at least three degrees of freedom operator action sensor data. These embodiments are beneficial as the operator action sensor itself is arranged on a movable member, i.e., its attitude with respect to the workpiece varies during a measurement. In other words, operator action sensors configured to provide operator action sensor data irrespectively of the orientation of the sensor are advantageous. It is beneficial if the operator action sensor is configured for isotropic response or at least calibrated to compensate an attitude dependent sensitivity. Despite the above benefits at least the core aspects of the invention might be realized with simpler operator action sensors.

The invention also relates to a method for determining a force or a torque exerted by an operator guiding a hand-controlled member of an AACMM in an external reference frame. The AACMM comprises a probe for approaching the object point, and a set of members connecting the probe to a base. The members comprise links and joints. The probe is moved at least partially manually by an operator guiding a hand-controlled member of the set of members.

The method comprises (i) accessing arrangement data comprising data regarding an arrangement of the members and kinematic constraints between the members, (ii) accessing component geometry data for each of the links, comprising (a) actual link data regarding a measured length and/or bending of the respective link, and/or, (b) link model data regarding a calculated length and/or bending of the respective link; and (iii) accessing component geometry for each of the joints comprising (a) actual joint data regarding a measured pose change provided by the respective joint, and/or, (b) joint model data regarding a calculated pose change provided by the respective joint, (iv) providing the pose of the hand-controlled member based on the arrangement data and the component geometry data, (v) measuring operator action sensor data, wherein the operator action sensor data comprises data regarding (a) the force and/or torque exerted by the operator on the hand-controlled member, and/or, (b) a displacement, i.e. strain or shearing, caused by the operator action, (vi) deriving the force or torque exerted by the operator guiding the hand-controlled member in the external reference frame based on the pose of the hand-controlled member and the operator action sensor data.

In some embodiments, the method further comprises (i) providing an overload feedback based on the operator action sensor data, and/or (ii) deriving intended operator movement data based on the operator action sensor data. Alternatively or additionally, the operator action sensor data might be processed in providing the component geometry data regarding the hand-controlled member.

In some embodiment, the method further comprises (i) determining, based on the operator action sensor data, whether the operator acts on the hand-controlled member, and (ii) causing a motionless parking state of the CMM, if the operator is not acting on the hand-controlled member, in particular bringing the probe to a pre-defined parking pose. Force/displacement sensors are inherently capable of providing touch/grip data, and this data can be advantageously utilized to improve the safety and user comfort of the AACMM instrument. A motionless parking state might be provided by passive friction or lock elements, by specific mechanical constructs, or active, motorized control. Two types of parking state might be provided. A short-term stable pose is advantageous for cases wherein the operator has to interrupt the measurement to perform a different task. For such interruptions, a stabilization of the probe close to its actual pose could be provided, allowing easy continuation of the measurement task. Contrary to that, it is advantageous to provide a long term, safe parking pose between the measurement tasks. I.e., pose that reduces the risk of damage to the articulated members, the probe interface and the probe, while allowing ergonomic replacement of the probe. In some specific embodiments, the hand-controlled member is the link that is kinematically the nearest to the probe.

In some embodiments the method comprises an assistance functionality. The assistance functionality comprises (i) deriving a resultant torque for a first joint resulting from the operator guiding the hand-controlled member, and (ii) applying a servo-torque to the first joint acting in a direction corresponding to the resultant torque. In some specific embodiments, the servo-torque is adjusted to constrain (i) a movement of a second joint in a plane perpendicular to the gravity vector, wherein the second joint connects a second link to the first link, or (ii) an orientation of the second link in plane perpendicular to the gravity vector, or (iii) all of the members to a vertical plane.

In some embodiments, the method comprises a safety functionality. The safety functionality comprises (i) providing a forbidden zone, in particular wherein an operator sets an upper and/or a lower safety level of a first joint, (ii) providing an assessment on an approach of the first joint, to the forbidden zone, and (iii) preventing the first joint to enter the forbidden zone.

The AACMM might comprise imaging or scanning sensors to automatically collect information regarding the environment and provide the forbidden zones based on the collected information. Alternatively or additionally, the forbidden zone might be provided on the basis of a workpiece data. One aspect of the invention relates to protect the AACMM and/or the workpiece from machine crashes potentially cause high material damage.

### BRIEF DESCRIPTION OF THE DRAWINGS

By way of example only, specific embodiments of the invention will be described more fully hereinafter with reference to the accompanying figures, wherein:
Figure 1a shows a generic AACMM;
Figure 1b illustrates a prior art measurement routine wherein unnatural gestures are required from an operator;
Figure 2 depicts schematically an operator action sensor as a four-degrees-of-freedom displacement sensor arranged around one of the links and an orientation dependent force measurement with the said sensor;
Figure 3 depicts alternative arrangements for operator action sensors;
Figure 4 depicts by a flowchart an embodiment of the inventive method;
Figure 5 depicts a servo-torque aided horizontal movement of the probe;
Figure 6 depicts by a flowchart an embodiment of the assistance functionality;
Figure 7 depicts two alternative utilizations of the inventive operator action sensor in a measurement task where high accuracy and reach are required;
Figure 8 depicts by a flowchart a servo-torque aided attitude keeping of the second link;
Figure 9 depicts schematically a setting of upper and lower safety levels;
Figure 10 depicts a flowchart the application of safety levels; and
Figure 11 depicts an exemplary embodiment of a counterweight unit.

### SPECIFIC EMBODIMENTS OF THE INVENTION

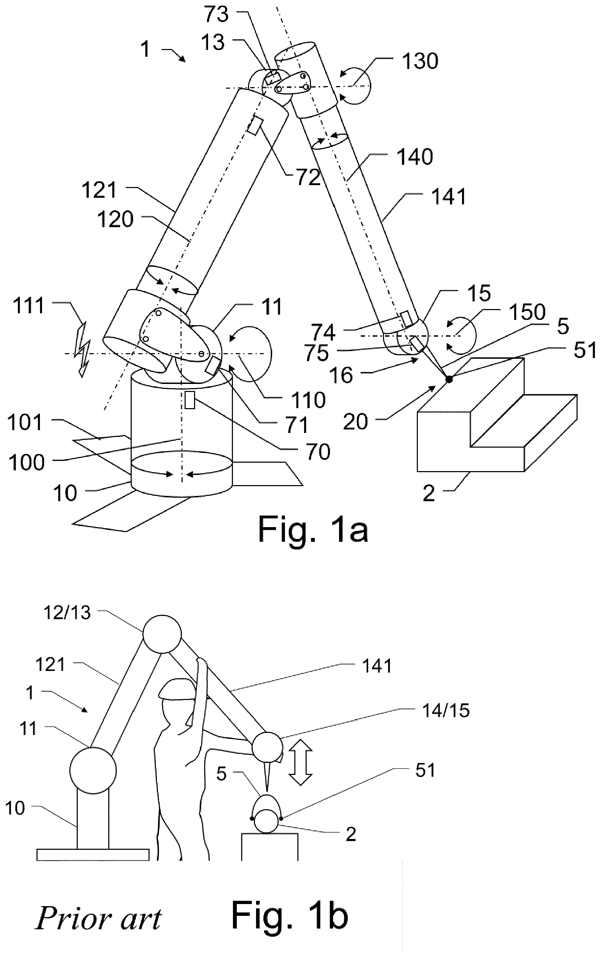

Figure 1a shows a generic AACMM **1** performing a coordinate measurement on a workpiece **2.** The depicted AACMM is equipped with a tactile sensor as the probe **5** mounted on the probe interface **16,** i.e., the operator performs the coordinate measurement by touching the object point **20** with the tactile sensing element **51,** depicted as ruby sphere. The AACMM **1** comprises a base **10** with fixing elements **101,** e.g., permanent magnets, screws, pneumatic components etc., configured to provide mechanical coupling with the environment in a fixed pose relative to the workpiece. The AACMM **1** also comprises a set of articulated members **11-15,121,141** connecting the probe **5** to the base **10.** The articulated members **11-15,121,141** comprise links **121,141** and joints **11-15.**

In the depicted embodiment each of the joints **11-15** and the base **10** provides one rotational degree of freedom about the respective axes **100,110,120,130,140,150.** The links **121,141** are elongated cylinders and the axes of rotation **120,140** of the segment joints **12,14** correspond to the direction of elongation. The further joints **11,13,15** are depicted as hinges providing a rotation about an axis perpendicular to the axes **100,120,140** of the base **10** and/or of the links **121,141.** The proximal side of the joints **11-15** has a fixed spatial relationship with the respective proximal component. The AACMM **1** comprises a set of internal sensors **70-75.** Each sensor is associated with at least one of the members **11-15,121,141** or the base **10** and provides actual joint and/or actual link data. In the depicted embodiment the first joint **11** is motorized **111,** i.e., the AACMM **1** is configured to provide a servo-torque for the first joint **11** in response of operator actions. While many features are illustrated with embodiments like the one depicted in Figure 1, the claimed invention is not limited to this embodiment.

Figure 1b depicts a measurement routine, wherein the diameter of a cylindrical workpiece **2** is determined by an AACMM **1** having a probe **5** with a tactile sensing element **51.** The depicted AACMM comprises a set of members **11-15,121,141** connecting the probe **5** to a base **10.** For simplicity the depicted links **121,141** are considered as essentially rigid members, while some of the depicted joints **11-15** are considered to provide mobility in more than one degree of freedom. To ensure the highest possible accuracy, the attitude of the members **11-15,121,141** and the probe **5** should be consistent throughout the measurement. This can be achieved using the depicted method, wherein the members **11-15,121,141** and the probe **5** are constrained to a vertical plane, by the operator holding the second link **141,** or alternatively the second joint **12/13** and moving the probe **5** vertically. For this, however, the operator either must grip the second link **141** far from the probe, as depicted, or have to exert excessive torque. Both are tiresome. Moreover, they could result in a bending of the second link **141** causing a temporary or permanent loss of accuracy for the AACMM **1.**

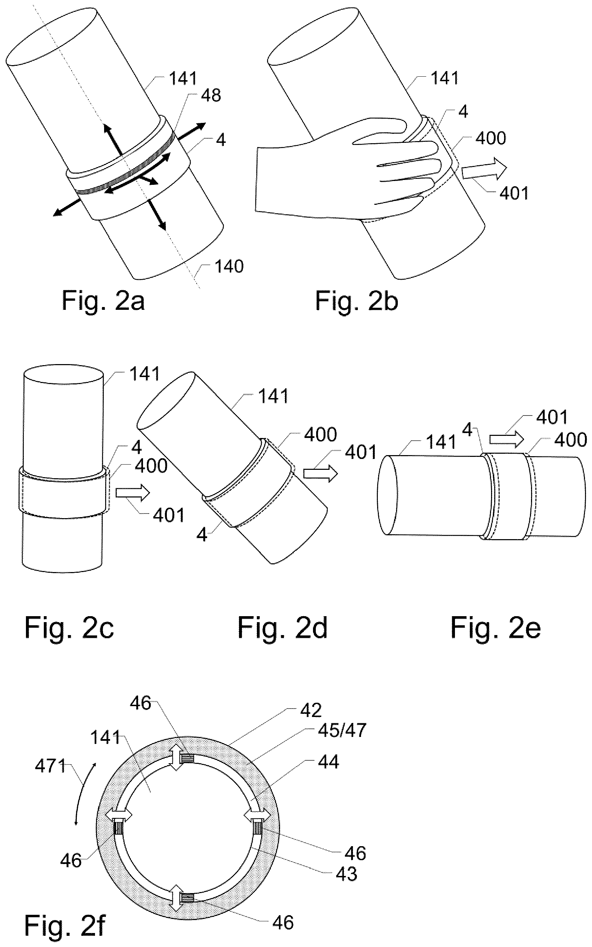

Figure 2 depicts a first embodiment of the operator action sensor **4** as a touch sensitive band mounted to the hand-controlled member. The depicted hand-controlled member is the second link **141,** i.e., a link kinematically close to the probe. The operator action sensor **4** is mounted such that it is concentric to the second link **141** in a rest state. The operator action sensor **4** is elastically displaceable to a displaced state by three translation directions and a rotation around the axis **140** of the second link **141.** The measured displacement **400** comprises information regarding a force **401** or torque exerted by the operator.

The depicted operator action sensor **4** is foreseen to (i) provide an operator contact area for the operator to support the second link **141,** and (ii) at least partially transfer a driving force **401** exerted to manually guide the second link **141** to a new pose. The depicted operator action sensor **4** comprises a feedback element **48,** depicted as a light emitting band, the light emitting band is configured to provide a feedback regarding the status of the AACMM and/or the operator action sensor **4,** e.g., whether the system is ready for operation or an error has been detected and/or certain modes are active. The skilled person might provide alternative visual, acoustic, or haptic feedback elements **48.** The operator action sensor **4** might comprise or act as touch sensitive surface configured to receive operator command input data, e.g., regarding the activation of certain modes of the AACMM. The operator command input data might correspond to a touch gesture, e.g., a multi-touch action and/or a grip gesture.

Figure 2c-e depicts the measurement of the force **401** exerted by the operator for vertical (2c), angled (2d), and horizontal (2e) orientation of the second link **141** and the operator action sensor **4.** Depending on the orientation the displacement **400** might correspond to different relative movements, i.e., different degree of freedom of the operator action sensor **4.** For the invention it is advantageous to utilize operator action sensors with at least three degrees of freedom, particularly when the displacement **400** to force **401** response is isotropic and/or calibrated.

Figure 2f depicts a cross-sectional view of the operator action sensor mounted to the second link **141** as hand-controlled member. The operator action sensor comprises an outer surface **42** configured to be held by the operator, an inner surface **43** configured to interact with the second link, in particular to transfer a part of the force or torque exerted by the operator, an internal volume **44** comprising a sensing element **46,** depicted as two pairs of uniaxial piezo elements, configured to provide the operator action sensor data. The operator action sensor further comprises a thermal isolation region **45** configured to provide a thermal isolation between the inner **43** and the outer surfaces **42.** In the depicted embodiment the thermal isolation region **45** is also configured to act as a bearing **47** configured to provide a rotatability **471** of the outer surface **42** with respect to the internal volume **44** such that the operator action sensor data is provided independently of the rotation state of the outer surface **42.** In alternative embodiments, the rotation state of the outer surface **42** and/or a torque applied to rotate the outer surface **42** about the second link **141** might be comprised by the operator action data.

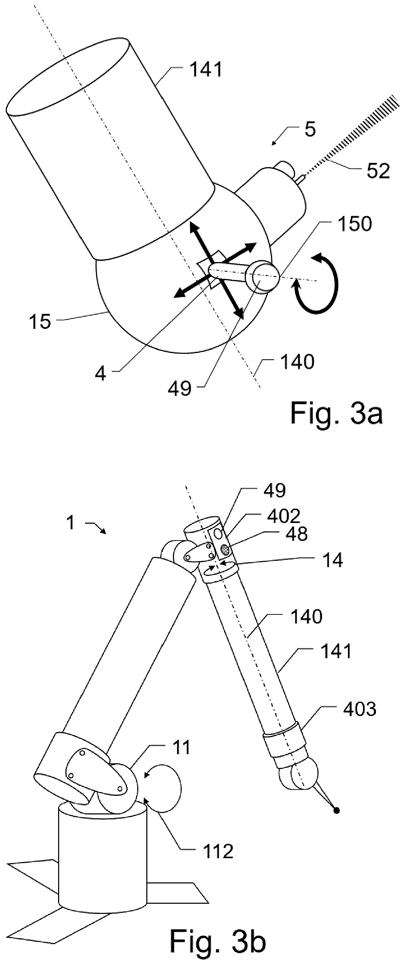

Figure 3a depicts a second embodiment of the operator action sensor **4** as a joystick providing two translational and one rotational degree of freedom (about the axis **150** of the third joint **15**). Alternatively or additionally, the joystick might also provide a third translational degree of freedom or a rotational degree of freedom about the axis **140** of the second link **141.** The joystick is mounted on the third joint **15,** as the hand-controlled member, along the axis of rotation **150.** The joystick also comprises a button as command input element **49** configured to receive operator command input data, e.g., regarding the activation of certain modes of the AACMM. The joystick might comprise further command input elements. The depicted joystick is also foreseen to provide the functions mentioned in the previous embodiment. The probe **5** in the depicted embodiment is a non-contact probe emitting a probing radiation **52,** e.g., a structured light.

Figure 3b depicts a third embodiment of the operator action sensor comprising a first **402** and a second sensor element **403.** The second sensor element is mounted to a second link **141** as a hand-controlled member, while the first sensor element **402** is mounted to the second segment joint **14.** Said joint provides a rotatability to the second link **141** about the second segment axis **140.** The second segment joint **14** is coaxial with the second link **141.** Such arrangements are beneficial when the operator wishes to set the pose of the second segment axis **140** with high precision and performs a two-hand grip by the first **402** and second sensor elements **403.** This can be utilized e.g., in setting a forbidden zone to the AACMM **1.** The first sensor element **402** also exhibits a command input element **49,** depicted as a button, and a feedback element **48,** depicted as an LED light. The operator could press the button to record a rotation state **112** of the first joint **11** representing a safety limit, wherein the feedback element **48** provides feedback regarding a recording of the safety limit. Alternatively or additionally, a desired attitude of the second segment axis can also be recorded. The feedback element **48** might indicate whether the assistance functionality is active.

The depicted embodiments of the operation action sensor serve only illustrative purposes, the invention is not limited to the depicted embodiments. The skilled person could provide a combination of the depicted features or alternative embodiments realizing the features of the inventive AACMM and the method.

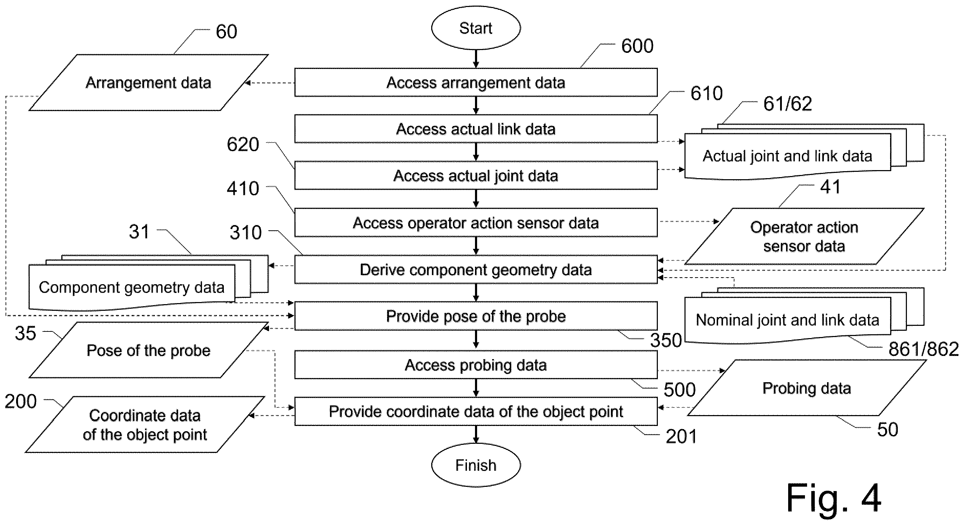

Figure 4 depicts a flowchart regarding the functioning of an inventive computer implemented method. Flow/command lines are shown with bold while data lines are shown with dashed lines. Some flow- and/or data lines might not be shown in the schematic flowchart for transparency reasons. While the execution of some steps depends on the availability of certain data, reasonable variations in the sequence of the steps are possible within the sense of the invention.

In the first step arrangement data **60** of the components of the AACMM are provided **600.** Arrangement data **60** might be in the form of a kinematic chain or dynamic modelling of the AACMM. In the next step actual link data **61** and actual joint data **62** regarding are accessed **610/620** from internal sensors associated with the respective links and joints. This is followed by accessing **410** operator action sensor data **41.** The operator action sensor data **41** comprise data regarding (a) the force exerted and/or the torque by the operator on the hand-controlled member, and/or (b) the displacement caused by the operator action. Based on the actual joint **61** and link data **62,** nominal joint **861** and link data **862** and the operator action sensor data **41** the component geometry data **31** is derived **310.** Derivation **310** in the sense of the invention might be modelling based on the mentioned data and the arrangement data **60.** Alternatively, the component geometry data **31** might be provided by associating the actual joint **61** and link data **62,** and the nominal joint **861** and link data **862** to the respective components. The pose **35** of the probe is provided **350** based on the component geometry **31** and arrangement data **60.** Coordinates **200** of the object point are provided **201** based on the pose **35** of the probe and the accessed **500** probing data **50.**

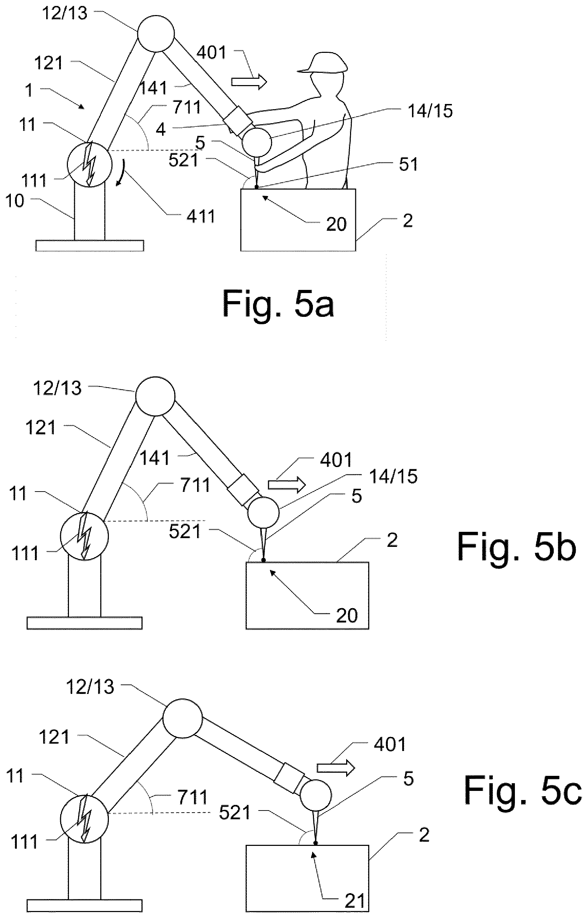

Figure 5a depicts a measurement of workpiece **2** with an inventive method using an inventive AACMM **1.** The AACMM comprises a set of members **11-15,121,141** connecting the probe **5** to a base **10.** In the depicted embodiment the probe **5** is a tactile probe comprising the tactile sensing element **51,** depicted as ruby sphere. The tactile sensing element **51** establishes a contact with an object point **20** on the workpiece **2** and provides probing data regarding the object point **20.** To ensure the highest precision it is recommended that the angle **521** between the probe **5** and the surface of the workpiece **2** at the object point kept in certain range, e.g., the probe **5** is substantially perpendicular to the surface of the workpiece **2.**

The AACMM **1** further comprises an operator action sensor **4** mounted on a hand-controlled member, depicted as the second link **141,** and configured to measure operator action sensor data. The operator action sensor data comprises data regarding a force **401** exerted by the operator, said force is representative of a planned operator action. The AACMM also comprises a motorized counterweight unit **111** associated with the first joint **11.** The motorized counterweight unit **111** is configured to set a rotation state of the first joint, respectively the angle **711** of the first link **121** to a horizon, to target value by applying a servo-torque. Moreover, the motorized counterweight unit **111** is configured to provide a servo-torque responsive to force **401** exerted by the operator. The servo-torque might act in a direction corresponding to a resultant torque **411** for a first joint **11** arising from the force **401** or torque exerted by the operator. Motorizing the base **10** too, and providing a base servo-torque based on the sensor data from the operator action sensor is especially beneficial as it allow to perform the depicted measurement such that the members **11-15,121,141** are constrained to a vertical plane.

Owing to this arrangement the operator can perform a measurement as depicted in Figure 5a, i.e., by guiding the probe **5** with one hand, in particular setting the distance and the angle **521** between the probe and a surface of the workpiece **2,** while holding operator action sensor **4** mounted on a hand-controlled member kinematically close to the probe **5** with the other hand. The operator thereby controls the rotational state of the first joint **11.** Such natural measurement gestures reduce the workload as compared to the prior art system. Moreover, owing to the gesture driven, real-space control by the operator action sensor **4** a control of the attitude of the members **11-15,121,141** is intuitive.

Figure 5b depicts a first phase of a measurement of the workpiece **2,** wherein coordinate data of the object point **20** is determined. Figure 5c depicts a second phase, wherein coordinate data of a further object point **21** is determined. The operator's intent is to guide the probe **5** in a horizontal plane while maintaining a right angle **521** between the probe **5** and the surface of the workpiece **2.** This intent is reflected by the force **401** exerted by the operator on the hand-controlled member. The motorized counterweight unit **111** provides the servo-torque based on the force **401** exerted by the operator such that the movement of the probe **5** is constrained to a horizontal plane, and in particular the members **11-15,121,141** are constrained in a vertical plane. This is achieved by adjusting the rotation state of the first joint **11,** or in other words, the angle **711** of the axis of the first link **121** to a horizon. The second joint **12/13** is idling to provide the appropriate attitude.

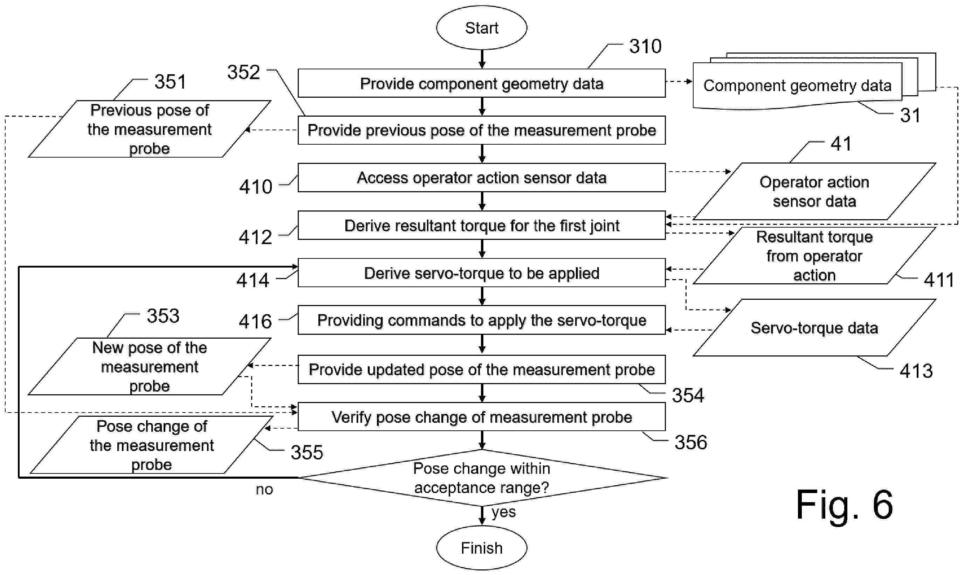

Figure 6 depicts a flowchart relating to a servo-torque aided measurement shown in Figure 5. The component geometry data **31,** a previous pose **351** of the probe, and the operator action sensor data **41** are provided **310,352,410** e.g., as shown in Figure 4. The resultant torque **411** from the operator action is derived **412** based on the operator action sensor data **41,** the component geometry data **31** and the arrangement data (not shown). In other words, the AACMM is modeled and the effects of the force and/or torque applied by the operator guiding the hand-controlled member are calculated. Based on the resultant torque **411** the servo-torque **413** is derived **414** and applied **416** to the first joint. In the depicted case the servo-torque **413** is provided to aid the desired horizontal movement of the probe. The depicted flowchart comprises control steps to ensure this effect. The said control steps are (i) providing **354** a new pose **353** of the probe, and (ii) verifying **356** the pose change **355.** If the pose change **355** is not fulfilling an acceptance criterion the servo-torque **413** is adjusted **414.**

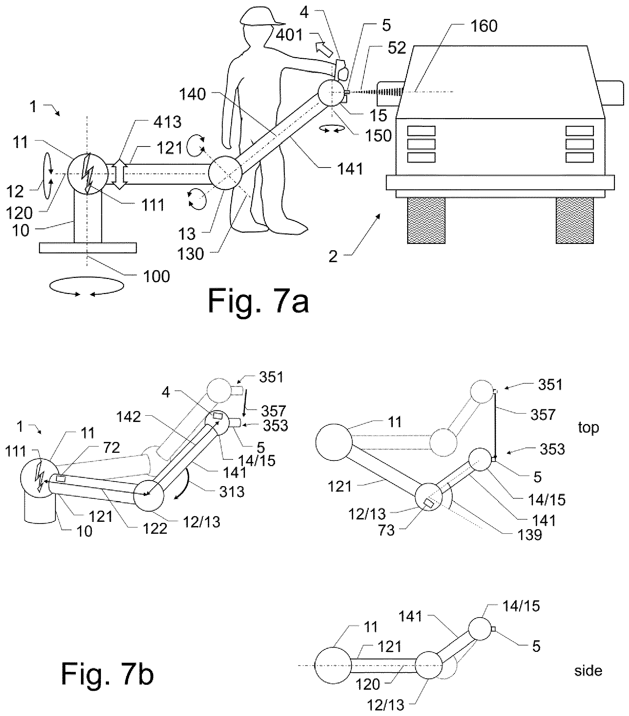

Figures 7a-7d show a quality control measurement of a car as large workpiece **2.** For measuring similar workpieces both high reach and accuracy are required from the AACMM 1. Short measurement times often form a third requirement, which necessitates a parallelized measurement by a non-contact probe **5** emitting a probing radiation **52.** Thus, the pose of the probe **5** is not constrained by a mechanical contact with the object points. Since measuring a deviation from a vertical or horizontal orientation can be executed more precisely it is advantageous to constrain at least one member to such orientations. The base **10** is vertical and enables a horizontal rotation about its axis **100.** In the embodiment depicted in Figure 7a the motor **111** of the first joint **11** provides a servo-torque **413** such that the axis **120** of the first segment joint **12,** and respectively the first link **121,** is horizontal. The second joint **13** is idling and an orientation of its axis **130** is constrained by attitude of the first **121** and second links **141.** The operator guides the probe **5** such that its axis **160** is horizontal using a handle mounted on the third joint **15,** i.e., utilizing a "one-handed grip". The respective axes **140,150** are aligned by this manual guidance. The third joint **15** is the hand-controlled member in the sense of the invention. The handle is an operator action sensor **4** providing operator action sensor data regarding the torque and force **401** exerted by the operator. Said operator action sensor data is utilized to derive component geometry data and with that the pose of the probe **5.** As the horizontal pose of the axis **120** of the first segment joint **12** can be provided irrespectively of the operator action, the operator sensor data is not utilized to control the servo-torque **413.** It might be processed to provide an overload warning and/or to determine whether the force **401** exerted by an operator is indicative of an intended termination of the measurement phase, e.g., a command provided by force override.

Figure 7b depicts in three views a schematic movement **357** of the probe **5** from a previous pose **351** to a new pose **353** and the related behavior of the base **10** and the members **11-15,121,141** during a measurement step shown in Figure 7a. The operator guides the probe **5** with a horizontal movement **357.** The path of the probe and the pose of the respective joint **15** is directly provided by the operator action. Respective sensors **72,73** provide measured lengths **122,142** of the links **121,141** and the pose changes, only one exemplary pose change **139** is shown, provided by the joints **11-15.** To maximize the reach provided by the first link **121,** the first link **121** and the axis **120** of the first segment joint **12** is constrained to a horizontal movement **313** by the motorized **111** first joint. As the AACMM **1** represents an under-determined system, the idling joints, here the joints **12-14,** provide the necessary mobility under these conditions. The operator action sensor **4** does not directly contribute to the control of the motorized **111** joint **11,** however it might provide data on whether the operator applies excessive force which might lead to temporary or permanent loss of accuracy and/or an override signal indicating that the operator wishes to end the constrained motion of the first link **121.**

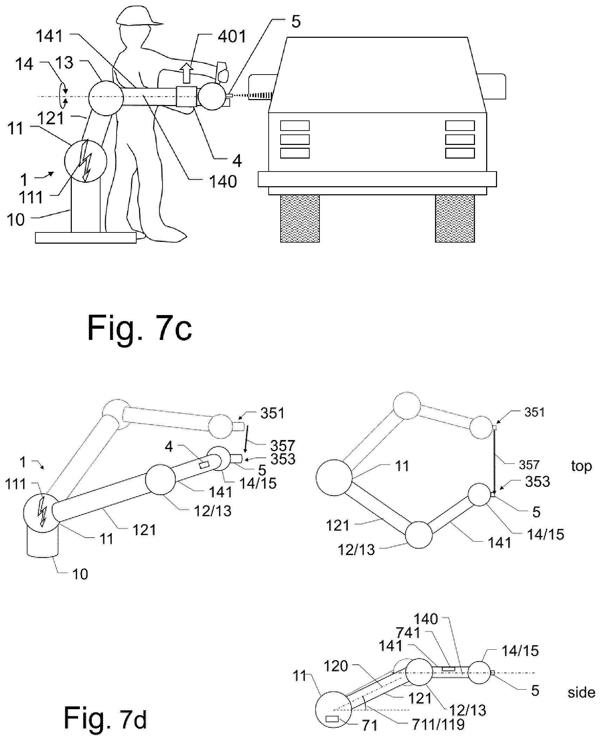

Figure 7c depicts an alternative measurement with the AACMM **1,** wherein the axis **140** of the second link **141** and with that the second segment joint **14** is constrained to a horizontal plane. The operator exerts force **401** on the band, acting as operator action sensor **4,** mounted on the second link **141.** The handle during such measurement is only utilized to provide the attitude of the probe **5,** thus it is operated without exerting substantial force. Based on the operator action sensor data the motor **111** provides the servo-torque to set an angle of the first joint **11** to keep the axis **140** of the second link **141** horizontal. The base **10** and the second joint **13** are idling and constrained by attitude of the first **121** and second links **141.**

Figure 7d depicts in three views a schematic movement **357** of the probe **5** from a previous pose **351** to a new pose **353** and the related behavior of the base **10** and of the members **11-15,121,141** during a measurement action shown in Figure 7c. For illustration purposes the movement **357** of the probe **5** corresponds to the same movement as depicted in Figure 7b. The invention can be applied with different probe movements **357,** in particular the height of the probe might change as a result of the movement **357.** The operator action sensor **4** might provide operator action sensor data regarding such desired height changes.

The constraint of the measurement, i.e., that the axis **140** of the second link **141** is horizontal, might be provided based on modelling the AACMM **1** taking into account the operator action sensor data. Additionally or alternatively, the AACMM **1** might comprise a levelling sensor **741** associated with the second link **141.** Said levelling sensor **741** might be integrated to the internal sensors or the operator action sensor **4.** The motor **111** associated with the first joint **11** sets the servo-torque to set the angle **711** of the axis **120** of the first link **121** to the horizontal, e.g., based on a pose change **119** data measured by the respective sensor **71.** Figures 7b and 7d also illustrates the underdetermined nature of the AACMM **1,** i.e., that the same poses **351,353** of the probe **5** could be realized by different poses of the members **11-15,121,141.** Unlike to the case depicted in Figure 7b, keeping the axis **140** of the second link **141** horizontal requires an active processing of the pose **351,353** of the probe **5** and the operator action sensor data.

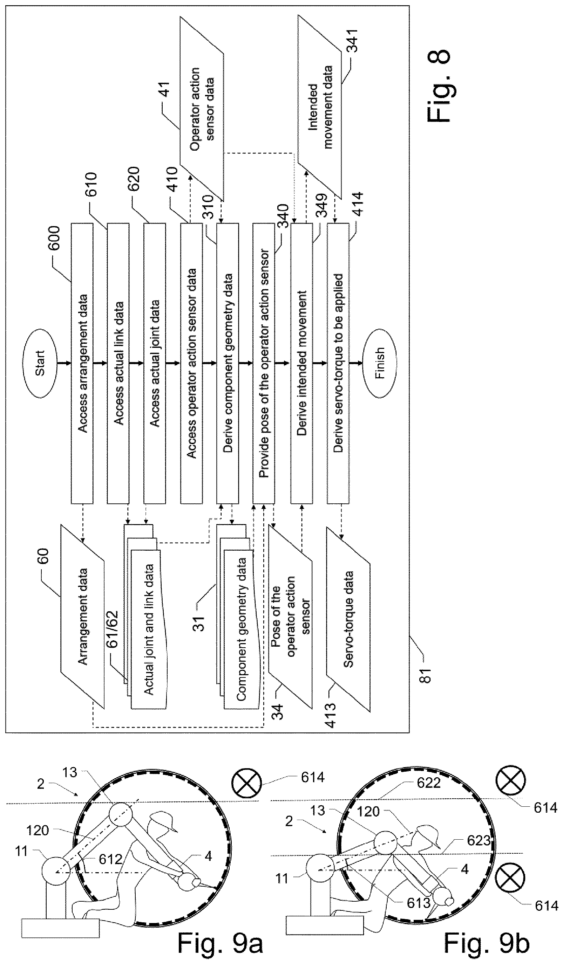

Figure 8 depicts a flowchart relating to a measurement aided by the assistance functionality **81,** i.e. applying a servo-torque **413** based on a derivation **349** of an intended movement **341.** For that the system determines **340** the pose **34,** in particular the attitude of, of the operator action sensor. The depicted method is based on accessing **600** arrangement data **60** and determining **310** component geometry data **31** based on accessed **610/620** actual link **61** and joint data **62** as well as accessed **410** operator action data **41.** The considerations regarding the pose determination of the probe, as shown in Figure 4, could be applied accordingly to this case.

If the pose **34** of the operator action sensor as well as the operator action sensor data **41** is known, an intended movement **341** with respect to an external reference system and/or reference system of the motorized joints, in particular the first joint, could be derived **349.** The servo-torque **413** can be applied **414** based on the intended movement **341** to reduce the force exerted by the operator and/or, to provide the pose of a given member. While the depicted complete modeling of the AACMM is advantageous for accuracy and reproducibility of the poses these steps are not strictly necessary for the assistance functionality **81.** Alternatively or additionally, the operator action sensor might be provided with a leveling sensor and the operator action sensor data **41** is interpreted on the basis of the data from the leveling sensor. The depicted assistance functionality **81** can be advantageously extended to provide further functionalities by providing a preferred attitude, height for one or more of the members or by providing one or more features from the examples of Figures 4-7.

It is clear that the examples depicted in Figures 5-8 are illustrations of the concept and not an express limitation. The invention is equally applicable when the movement of other articulated members are constrained, or when the movement is completely free. Constrained movement in the sense of the invention might equally cover exact constraints (i.e. wherein one or more degrees of freedom are locked) and substantial constraints (i.e. the counterweight unit attempts to provide a preferred range). The AACMM might comprise additionally or alternatively further counterweight unit associated with members other than the first joint and/or with the base. To perform the methods illustrated by Figures 5-8 a counterweight unit, in particular a motorized counterweight unit is necessary, other aspects of the invention are applicable without such counterweight unit.

Figure 9 depicts the setting of a forbidden zone **614** to the first joint **11** for a measurement of a workpiece **2** with limited clearance, e.g. measuring inside a tube. The operator first sets an upper safety level **612,** as shown in Figure 9a. This can be achieved by gesture control of the operator action sensor **4,** e.g., by keeping the operator action sensor **4** in a fixed position. While not mandatory this can be beneficially combinable with motorized first joints **11** and operator action sensors **4** having a plurality of sensor elements, as shown in Figure 3b. When the upper safety level **612** is registered the operator sets a lower safety level **613** similarly. Depending on the measurement task it is possible that only a single safety level **612,613** is set. The safety levels **612,613** on the one hand represent allowed rotation states of the first joint **11,** or an allowed attitude range of the first segment axis **120.** On the other hand, they represent an allowable height limit **622,623** of the second joint **13.**

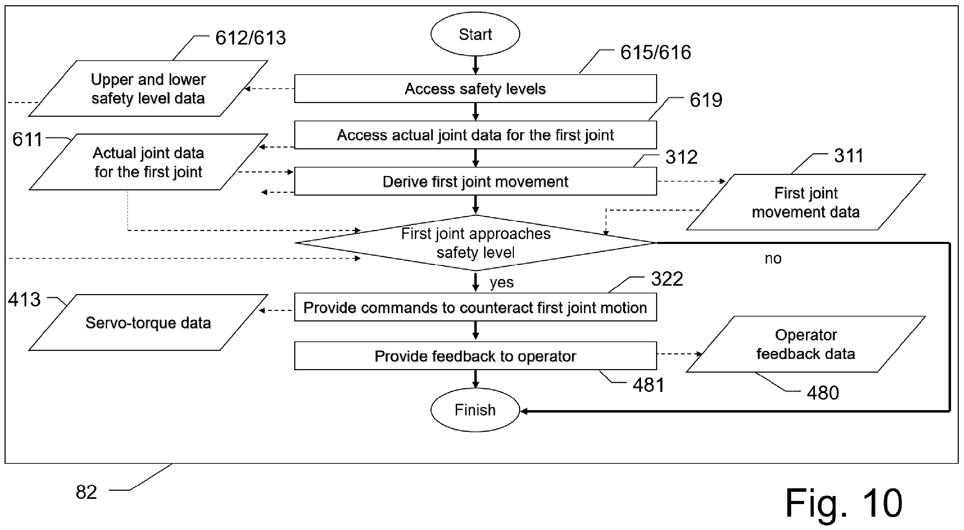

Figure 10 depicts a flowchart relating to the safety functionality **82.** In the first step the safety functionality **82** accesses **615/616** the respective upper **612** and lower safety levels **613.** The safety functionality then accesses **619** the actual joint data **611** for the first joint. Based on the current and historic joint data the safety functionality **82** derives **312** the movement **311** of the first joint. Based on the actual joint data **611** and the movement data **311** the safety functionality **82** assesses whether the first joint approaches one of the safety levels **612/613.** When the first joint approaches the safety levels, commands are provided **322** to counteract the detected movement **311.** In the depicted embodiment it is performed by adjusting the servo-torque **413,** i.e., the safety functionality **82** is provided by the assistance functionality. Alternative embodiments are also possible, in particular a brake might be activated. Additionally, a feedback **480,** in e.g., a visual or audio warning, is provided **481** to the operator. Embodiments of the safety functionality **82** without providing a servo-torque **413** are also possible. Indeed, such embodiments are especially suitable for non-motorized AACMMs and can also be realized by the inventive system and method.

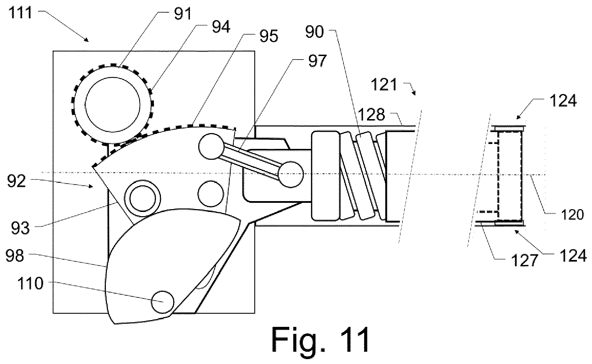

Figure 11 illustrates an embodiment of the counterweight unit **111** comprising a spring as passive component **90** and a motor, represented by a gearbox, as active component **91.** The spring is arranged along the axis **120** of the first link. A mechanism **92** comprising a lever gear **93** configured interact with the active component **91** via corresponding gears **94/95.** The passive component **90** is interacting with the level gear **93** via a rod **97.** The mechanism comprises a cam **98** mounted to the axis **110** of the first joint. The mechanism **92** thereby transfers torques provided by the active **91** and passive components **90** to the first joint **11.** The depicted first link **121** comprises the first link shell **128** and the internal support **127.** The interaction of the first link shell **128** and internal support **127** takes place only in an interaction area **124.** Many alternatives of the depicted counterweight unit **111** exist. A non-exclusive list comprises a passive component **90** with a leaf or torsion spring, a cam follower instead of the depicted lever gear **93,** an active component **91** mounted directly to the axis **111** of the first joint. These and further similar options are within the sense of the invention.

Although the invention is illustrated above, partly with reference to some specific embodiments, it must be understood that numerous modifications and combinations of different features of the embodiments can be made. All of these modifications lie within the scope of the appended claims.

## Claims

1. Operator action sensor (4) for an articulated arm coordinate measuring machine (1), configured
- to be mounted on a hand-controlled member of the articulated arm coordinate measuring machine (1), the hand-controlled member being configured to be held by an operator of the articulated arm coordinate measuring machine (1);
- to detect an operator action, the operator action comprising exertion of a force (401) and/or a torque by the operator to the operator action sensor (4) for providing a desired pose of the hand-controlled member;
- to generate operator action sensor data (41,) wherein the operator action sensor data (41) comprises data regarding
o the force (401) and/or torque exerted by the operator in at least two degrees-of-freedom, and/or
o a displacement (400) caused by the operator action in at least two degrees-of-freedom; and
- to provide (410) the operator action sensor data (41) to the articulated arm coordinate measuring machine (1).

2. The operator action sensor (4) according to claim 1, comprising a feedback element (48) configured to provide (481) feedback (480) regarding an operational status of the operator action sensor (4) and/or the coordinate measuring machine (1).

3. The operator action sensor (4) according to any one of claims 1 to 2, comprising a command input element (49) configured to receive operator command input data and to provide the operator command input data to the coordinate measuring machine (1),
in particular, wherein the command input element (49) comprises
- a hardware button or switch and the operator command input data correspond to an interaction with or a state of the button or switch,
- a touch sensitive surface and the operator command input data correspond to a touch gesture, in particular a multi-touch gesture.

4. The operator action sensor (4) according to any one of the preceding claims, comprising
- an outer surface (42) configured to be held by the operator,
- an inner surface (43) configured to interact with the hand-controlled member,
- an internal volume (44) comprising a sensing element (46) configured to provide the operator action sensor data (41), and
- a thermal isolation region (45) configured to provide a thermal isolation between the inner (43) and the outer surfaces (42),
and in particular
- a bearing (47) configured to provide a rotatability (471) to the outer surface (42) with respect to the internal volume (44) such that the operator action sensor data (41) is provided (410) independently of the rotation state of the outer surface (42).

5. Articulated arm coordinate measuring machine (1) comprising a set of internal sensors (70-75), a probe (5) for approaching an object point (20), a set of members (11-15,121,141) connecting the probe (5) to a base (10), the members (11-15,121,141) comprising links (121,141) and joints (11-15), wherein
- the probe (5) is configured to be moved at least partially manually by an operator guiding a hand-controlled member of the set of members (11 - 15,121,141),
- each sensor of the set of internal sensors (70-75) is
o associated with at least one of the members (11-15,121,141) or the base (10), and
o configured to provide (610,620) actual link data (62) regarding a measured length (122,142) and/or bending of the respective link (121,141), and/or actual joint data (61) regarding a measured pose change (119,139) provided by the respective joint (11-15) or the base (10),
- the probe (5) is configured to measure (500) probing data (50) corresponding to an interaction between the probe (5) and the object point (20), and
- the coordinate measuring machine (1) is configured
o to provide (350) a pose (35) of the probe (5) based on the actual link (62) and the actual joint data (61),
o to provide (201) coordinate data (200) of the object point (20) based on the probing data (50) and the pose (35) of the probe (5),
**characterized in that**
- the coordinate measuring machine (1) comprises an operator action sensor (4) according to any one of claims 1 to 4 mounted at the hand-controlled member.

6. The coordinate measuring machine (1) according to claim 5, comprising a pose determination functionality for determining (350) the pose (35) of the probe (5), wherein the pose determination functionality comprises
- accessing (600) arrangement data (60) comprising data regarding an arrangement of the members (11-15,121,141) and kinematic constraints between the members (11-15,121,141),
- providing (310) component geometry data (31) comprising
o for each of the links (121,141)
• the actual link data (62), and/or
• link model data regarding a calculated length and/or bending of the respective link (121,141) based on the arrangement data (60), the actual link data (62), the actual joint data (61), and the operator action sensor data (41), and
o for each of the joints (11-15)
• the actual joint data (61), and/or
• joint model data regarding a calculated pose change provided by the respective joint (11-15) based on the arrangement data (60), the actual link data (62), the actual joint data (61), and the operator action sensor data (41),
- providing (350) the pose (35) of the probe (5) based on the arrangement data (60) and the component geometry data (31).

7. The coordinate measuring machine (1) according to any one of claims 5 to 6, comprising
- a counterweight unit (111) associated with a first joint (11) and configured to provide (416) a servo-torque (413),
- an assistance functionality (81) comprising
o deriving (412) for the first joint (11) a resultant torque (411) resulting from the force (401) or torque exerted by the operator,
o providing (416) a servo-torque (413) acting in a direction corresponding to the resultant torque (411),
in particular wherein the coordinate measuring machine (1)
- regulates the servo-torque (413) such that the force (401) and/or the torque exerted by the operator or the displacement (400) caused by the operator is reduced, in particular approaches zero,
- derives (412) the resultant torque (411) based on the arrangement data (60), the actual joint data (61) and the actual link data (62).

8. The coordinate measuring machine (1) according to claim 7, wherein
- the first joint (11) connects a base (10) to a first link (121),
- the counterweight unit (111) comprises
o a passive component (90) comprising a spring, in particular a coil spring arranged along an axis (120) of the first link (121),
o an active component (91) comprising a motor, and
o a mechanism (92) configured to transfer torques provided by the active (91) and passive components (90) to the first joint (11),
- the torque provided by the passive component (90) is constant or corresponds to a gravity related torque acting on the first joint (11), and
- the torque provided by the active component (91) is responsive to the operator action sensor data (41).

9. The coordinate measuring machine (1) according to any one of claims 7 to 8, being configured to provide (416) the servo-torque (413) in dependence of
- a pose (35) and type of the probe (5), and/or
- a linear and/or angular velocity of the probe (5), and/or
- an orientation of the second link (141), and/or
- a pose of the second joint (13), and/or
- a previous operator action, in particular operator command input data,
in particular wherein
- the coordinate measuring machine (1) is configured to operate in a precision mode and in in a repositioning mode,
- the precision mode and the repositioning mode are activated automatically based on the pose (35) of the probe (5), automatically based on the operator action data, or manually based on receiving respective operator command input data,
- wherein in the precision mode
o a responsiveness of the active component to the operator action sensor data (41) is increased to a value corresponding to the precision mode, and
o a velocity of at least one member (11-15,121,141) is limited to a velocity range corresponding to a precision mode and/or,
o an orientation of at least one member (11-15,121,141) is limited to an orientation range corresponding to the precision mode,
- wherein in the repositioning mode
o velocities above the velocity limit of the precision mode are enabled,
o the responsiveness of the active component to the operator action sensor data (41) is decreased to a value corresponding to the repositioning mode.

10. The coordinate measuring machine (1) according to any one of claims 5 to 9, wherein the hand-controlled member is a link kinematically nearest to the probe (5).

11. Method for determining a force (401) or a torque exerted by an operator guiding a hand-controlled member of an articulated arm coordinate measuring machine (1) in an external reference frame,
wherein the coordinate measuring machine (1) comprises a probe (5) for approaching the object point (20), and a set of members (11-15,121,141) connecting the probe (5) to a base (10), the members (11-15,121,141) comprising links (121,141) and joints (11-15),
wherein the method comprises
- accessing (600) arrangement data (60) comprising data regarding an arrangement of the members (11-15,121,141) and kinematic constraints between the members (11-15,121,141);
- accessing (310) component geometry data (31) comprising
o for each of the links (121,141)
• actual link data (62) regarding a measured length (122,142) and/or bending of the respective link (121,141), and/or
• link model data regarding a calculated length and/or bending of the respective link (121,141), and
o for each of the joints (11-15)
• actual joint data (61) regarding a measured pose change (119,139) provided by the respective joint (11-15) or the base (10), and/or
• joint model data regarding a calculated pose change provided by the respective joint (11-15) or the base (10); and
- providing the pose of the hand-controlled member based on the arrangement data (60) and the component geometry data (31),
**characterized in that**
the method further comprises
- measuring operator action sensor data (41), wherein the operator action sensor data (41) comprises data regarding
o the force (401) and/or a torque exerted by the operator on the hand-controlled member, and/or
o a displacement (400) caused by the operator action,
- deriving the force (401) or torque exerted by the operator guiding the hand-controlled member in the external reference frame based on the pose of the hand-controlled member and the operator action sensor data (41).

12. Method according to claim 11, further comprising
- providing an overload feedback based the operator action sensor data (41),
and/or
- deriving (349) intended operator movement data (341) based the operator action sensor data (41).

13. Method according to any one of claims 11 to 12, further comprising
- determining, based on the operator action sensor data (41), whether the operator acts on the hand-controlled member,
- causing a motionless parking state of the coordinate measuring machine (1), if the operator is not acting on the hand-controlled member, in particular bringing the probe (5) to a pre-defined parking pose.

14. Method according to any one of claims 11 to 13, further comprising an assistance functionality (81), wherein the assistance functionality (81) comprises
- deriving (412) a resultant torque (411) for a first joint (11) resulting from the operator guiding the hand-controlled member, and
- applying (416) a servo-torque (413) to the first joint (11) acting in a direction corresponding to the resultant torque (411),
in particular wherein the servo-torque (413) is adjusted to constrain
- a movement of a second joint (13) in a plane perpendicular to the gravity vector, wherein the second joint (13) connects a second link (141) to the first link (121), or
- an orientation of the second link (141) in plane perpendicular to the gravity vector,
- each of the members (11-15,121,141) to a vertical plane.

15. Method according to any one of claims 11 to 14, comprising a safety functionality (82), wherein the safety functionality (82) comprises
- providing a forbidden zone (614),
- providing an assessment on an approach of the first joint (11), to the forbidden zone (614), and
- preventing (322) the first joint (11) to enter the forbidden zone (614).
